# FASCICULE DE BREVET EUROPEEN

(11) **EP 0 298 800 B1**
(45) Date de publication et mention de la délivrance du brevet: **05.05.1993**
(21) Numéro de dépôt: 88401493.7
(22) Date de dépôt: 16.06.1988
(51) Int. Cl.: H01M 6/18

(54) **nrocédé de fabrication d'un ensemble multi-couches utilisable pour la réalisation de l'assemblage de générateurs électrochimiques au lithium en couche mince à électrolyte solide polymère**
Verfahren zur Herstellung einer Mehrschichtstruktur zur Herstellung von als Dünnschicht ausgebildeten elektrochemischen Generatoren mit einer Lithiumdünnschicht und einem Feststoff-Polymerelektrolyten
Process for making a multilayer structure for use in thin-layer electrochemical generators with a thin layer of lithium and a solid polymer electrolyte

(30) Priorité: 18.06.1987 FR 8708541
(43) Date de publication de la demande: 11.01.1989
(73) Titulaire: SOCIETE NATIONALE ELF AQUITAINE, 92400 Courbevoie (FR); HYDRO-QUEBEC, Montréal Québec H2Z 1A4 (CA)
(72) Inventeur: Muller, Daniel, F-64000 Pau (FR); Gauthier, Michel, La Prairie Québec (CA); Kapfer, Bruno, Longueuil Québec J4M 1A8 (CA)
(74) Mandataire: Boillot, Marc

(56) Documents cités:
- EP-A- 0 146 245
- EP-A- 0 147 929
- EP-A- 0 165 827
- DE-B- 1 300 596
- GB-A- 2 148 586
- US-A- 4 345 954
- CHEMICAL & ENGINEERING, vol. 63, no. 20, 20 mai 1985, pages 42-57, D.F. SHRIVER et al.: "Solid ionic conductors"

## Description

La présente invention concerne un procédé de fabrication d'un ensemble multicouche utilisable pour la réalisation de l'assemblage, par enroulement, empilement ou pliage, de générateurs électrochimiques au lithium en couche mince à électrolyte solide polymère, cet ensemble multicouche comportant une couche d'un métal faiblement ductile du type aluminium, cuivre, nickel ou acier inoxydable, une couche de lithium ou d'alliage ductile à base de lithium, au moins une couche d'électrode positive composite et au moins une couche d'électrolyte solide polymère.

Le principe des générateurs à électrolyte polymère est bien connu de l'homme de l'art, il est en particulier décrit dans le brevet français publié sous le n^{o} 2 542 322 et intitulé : "Matériau macromoléculaire à conduction ionique constitué par un sel en solution dans un copolymère". De tels générateurs, selon cet art antérieur, sont constitués par une électrode positive, un électrolyte et une électrode négative, ces trois éléments étant pris en sandwich entre deux collecteurs métalliques.

Ainsi qu'indiqué dans le brevet français publié sous le n^{o} 2 442 514, l'intérêt de ces générateurs selon l'art antérieur réside essentiellement dans le fait qu'ils forment un ensemble multicouche élémentaire, dans lequel chacune des couches est souple, de très faible épaisseur (< 80 µm), et adhère fortement aux couches adjacentes, l'épaisseur globale de l'ensemble multicouche élémentaire étant généralement comprise entre 30 et 300 µm.

Pour préparer des générateurs de grande capacité énergétique faisant appel à des surfaces relativement importantes, on est amené à réaliser soit des empilements à plat soit des enroulements ou encore des pliages divers de tels ensembles multicouches élémentaires.

Dans le cas d'enroulements ou de pliages, les ensembles multicouches élémentaires sont soumis à des courbures importantes. On sait que pour plier ou courber sans dommage deux films non ductiles superposés, il est nécessaire que ces films puissent glisser l'un par rapport à l'autre aux pliures ou courbures. Si les deux films non ductiles sont solidarisés par l'intermédiaire d'un adhésif, même élastique et en couche mince, il se produit, à la pliure ou courbure, des contraintes très importantes qui conduisent soit à la rupture du film extérieur soit au plissement du film intérieur.

Dans le cas de générateurs électrochimiques en couche mince, c'est-à-dire de générateurs formés de l'ensemble multicouche élémentaire précité, la rupture de l'une des couches aussi bien que le plissement de l'autre conduisent à la destruction du générateur soit par rupture de contact soit par court-circuit permanent.

Un but de l'invention est de proposer un procédé de fabrication d'un ensemble multicouche, qui permet de réaliser l'assemblage de générateurs électrochimiques au lithium en couche mince à électrolyte polymère solide en faisant appel non seulement à des techniques par empilement mais également à des techniques par enroulement ou pliage, ledit procédé pouvant être facilement mis en oeuvre d'une façon continue grâce aux excellentes propriétés de souplesse, d'adhésivité et de résistance mécanique des éléments utilisés pour former ledit ensemble multicouche.

Le procédé selon l'invention pour la fabrication d'un ensemble multicouche, utilisable pour la réalisation de l'assemblage, par enroulement, empilement ou pliage, de générateurs électrochimiques au lithium en couche mince à électrolyte solide polymère, cet ensemble multicouche comportant une couche d'un métal faiblement ductible du type aluminium, cuivre, nickel ou acier inoxydable, une couche de lithium ou d'alliage ductile à base de lithium, au moins une couche d'électrode positive composite et au moins une couche d'électrolyte solide polymère, est du type consistant à appliquer lesdites couches l'une sur l'autre en opérant de telle sorte que la couche de lithium ou d'alliage ductile à base de lithium ne vienne pas au contact d'une couche d'électrode positive composite et il se caractérise en ce que la formation de l'ensemble multicouche par application l'une sur l'autre des couches utilisées pour le composer est réalisée par lamination par passage entre les rouleaux d'au moins une paire de rouleaux, en ce que l'on amène la couche d'électrolyte solide polymère et la couche d'électrode positive composite à l'opération de lamination sous la forme d'un sous-ensemble bicouche électrolyte/électrode, qui comporte la couche d'électrolyte solide polymère accolée à la couche d'électrode positive composite et qui est supporté soit sur la couche du métal faiblement ductile soit sur un fim pelable en une matière plastique inerte, et en ce que l'on conduit l'opération de lamination de telle sorte que la couche de lithium ou d'alliage ductile à base de lithium amenée à passer entre les rouleaux de chaque paire de rouleaux est séparée desdits rouleaux soit par un film plastique pelable, soit par une couche du métal faiblement ductile ou encore par une partie de l'ensemble multicouche à produire.

Selon un premier mode de mise en oeuvre du procédé selon l'invention, qui conduit à l'obtention d'un ensemble multicouche à quatre couches pour lequel la couche du métal faiblement ductile est en contact avec la couche d'électrode positive, on amène à l'opération de lamination, d'une part, un sous-ensemble bicouche électrolyte/électrode supporté côté électrode par la couche du métal faiblement ductile et, d'autre part, la couche de lithium ou d'alliage ductile à base de lithium supportée par un film plastique pelable et l'on met en oeuvre l'opération de lamination de manière à appliquer ladite couche de lithium ou d'alliage ductile à base de lithium sur la couche d'électrolyte du sous-ensemble bicouche.

Selon un deuxième mode de mise en oeuvre du procédé selon l'invention, qui conduit encore à l'obtention d'un ensemble multicouche à quatre couches pour lequel la couche du métal faiblement ductile est en contact avec la couche d'électrode positive, on amène à l'opération de lamination un sous-ensemble bicouche électrolyte/électrode supporté, côté électrode, par un film plastique pelable, la couche de lithium ou d'alliage ductile à base de lithium, supportée par un film plastique pelable, et la couche du métal faiblement ductile et l'on met en oeuvre l'opération de lamination de manière à appliquer ladite couche de lithium ou d'alliage ductile à base de lithium sur la couche d'électrolyte du sous-ensemble bicouche, puis, après avoir retiré le film plastique support recouvrant la couche d'électrode dudit sous-ensemble, à appliquer la couche du métal faiblement ductile sur ladite couche d'électrode.

Selon un troisième mode de mise en oeuvre du procédé selon l'invention, qui conduit à l'obtention d'un ensemble multicouche à six couches pour lequel la couche du métal faiblement ductile est apparente, on opére selon le premier ou le deuxième mode de mise en oeuvre du procédé selon l'invention, puis, sur la couche de lithium ou d'alliage ductile à base de lithium laminée sur le sous-ensemble bicouche électrolyte/électrode supporté, on applique, également par lamination, après avoir retiré le film plastique recouvrant ladite couche, le côté électrolyte d'un second sous-ensemble bicouche électrolyte/électrode, ledit sous-ensemble étant éventuellement supporté, côté électrode, par un film plastique pelable, que l'on retire en fin d'opération.

Selon un quatrième mode de mise en oeuvre du procédé selon l'invention, qui conduit à l'obtention d'un ensemble multicouche à six couches pour lequel la couche du métal faiblement ductile occupe une position centrale, on opère selon le premier ou le deuxième mode de mise en oeuvre du procédé selon l'invention, puis, sur la face libre de la couche du métal faiblement ductile supportant le sous-ensemble bicouche électrolyte/électrode associé à la couche de lithium ou d'alliage ductile à base de lithium, on applique, par lamination, le côté électrode d'un second sous-ensemble bicouche électrolyte/électrode, ledit second sous-ensemble étant éventuellement supporté, côté électrolyte, par un film plastique pelable, que l'on retire en fin d'opération.

Selon un cinquième mode de mise en oeuvre du procédé selon l'invention, qui conduit également à l'obtention d'un ensemble multicouche à six couches pour lequel la couche de métal faiblement ductile occupe une position centrale, on amène à l'opération de lamination la couche du métal faiblement ductile, deux sous-ensembles bicouches électrolyte/électrode, lesdits sous-ensembles étant éventuellement supportés, côté électrolyte, par un film plastique pelable, et une couche de lithium ou d'alliage ductile à base de lithium supportée par un film plastique pelable et l'on met en oeuvre l'opération de lamination de manière à appliquer le côté électrode d'un sous-ensemble électrolyte/électrode sur chacune des deux faces de la couche du métal faiblement ductile, puis à appliquer la couche de lithium ou d'alliage ductile à base de lithium sur la couche d'électrolyte de l'un desdits sous-ensembles associés à la couche du métal faiblement ductile, après avoir retiré, s'il est présent, le film plastique support recouvrant ladite couche d'électrolyte.

Selon un sixième mode de mise en oeuvre du procédé selon l'invention, qui conduit à l'obtention d'un ensemble multicouche à quatre couches pour lequel la couche du métal faiblement ductile est en contact avec la couche de lithium ou d'alliage ductile à base de lithium, on amène à l'opération de lamination la couche du métal faiblement ductile, ledit métal étant du type ne réagissant pas avec le lithium, la couche de lithium ou d'alliage ductile à base de lithium supportée par un film plastique pelable et un sous-ensemble bicouche électrolyte/électrode, ledit sous-ensemble étant éventuellement recouvert, côté électrode, d'un film plastique pelable que l'on retire ou non en fin d'opération, et l'on met en oeuvre l'opération de lamination de manière à appliquer la couche de lithium ou d'alliage ductile à base de lithium sur l'une des faces de la couche du métal faiblement ductile ne réagissant pas avec le lithium, puis à appliquer le côté électrolyte du sous-ensemble bicouche électrolyte/électrode sur la couche de lithium ou d'alliage ductile à base de lithium après avoir retiré le film plastique pelable recouvrant ladite couche.

Selon un septième mode de mise en oeuvre du procédé selon l'invention, qui conduit également à l'obtention d'un ensemble multicouche à quatre couches pour lequel la couche du métal faiblement ductile est en contact avec la couche de lithium ou d'alliage ductile à base de lithium, on amène à l'opération de lamination un sous-ensemble bicouche électrolyte/électrode supporté, côté électrode, par un film plastique pelable, que l'on retire ou non en fin d'opération, et la couche de lithium ou d'alliage ductile à base de lithium supportée sur la couche du métal faiblement ductile, ledit métal ne réagissant pas avec le lithium et on met en oeuvre l'opération de lamination de manière à appliquer la couche de lithium ou d'alliage ductile à base de lithium sur le côté électrolyte du sous-ensemble bicouche électrolyte/électrode.

L'ensemble multicouche obtenu par le procédé selon l'invention comporte une couche unique de métal de faible ductilité à laquelle sont associées les couches des autres composants du générateur.

Avec les ensembles multicouches selon l'invention, on peut réaliser un générateur électrochimique complet par empilement, enroulement ou pliage.

Ainsi l'ensemble multicouche à quatre couches obtenu selon le premier ou le deuxième mode de mise en oeuvre du procédé selon l'invention peut être enroulé ou plié pour former un générateur électrochimique.

Lorsque le métal de la couche du métal faiblement ductile ne réagit pas avec le lithium, plusieurs des ensembles multicouches à quatre couches obtenus, selon le premier ou le deuxième mode de mise en oeuvre du procédé selon l'invention peuvent être empilés, après avoir retiré le film plastique recouvrant leur couche de lithium ou d'alliage ductile à base de lithium, de manière à appliquer une couche de lithium sur la face libre d'une couche du métal faiblement ductile, pour former un générateur électrochimique.

L'ensemble multicouche à six couches obtenu selon l'un ou l'autre des troisième, quatrième ou cinquième mode de mise en oeuvre indiqués plus haut peut être enroulé ou plié ou bien plusieurs desdits ensembles multicouches à six couches peuvent être empilés pour former un générateur électrochimique.

Plusieurs des ensembles muticouches à quatre couches obtenus selon le sixième ou le septième mode de mise en oeuvre du procédé selon l'invention peuvent être empilés, après avoir retiré le film plastique pelable recouvrant leur couche d'électrode positive, et un collecteur de positive peut être appliqué sur la dernière couche libre d'électrode positive, pour former un générateur électrochimique.

On peut encore former un générateur électrochimique en appliquant un ensemble multicouche à quatre couches obtenu selon le sixième ou le septième mode de mise en oeuvre du procédé selon l'invention, après avoir retiré le film plastique pelable recouvrant sa couche d'électrode positive, sur chacune des faces d'une couche d'un métal faiblement ductile tel que cuivre, nickel, aluminium ou acier inoxydable, de telle sorte que la couche d'électrode positive de chaque ensemble multicouche soit en contact avec le métal faiblement ductile.

On comprend que l'un des avantages des ensembles multicouches réalisés par le procédé selon l'invention réside dans le fait que l'on obtient un ensemble comportant une seule couche d'un métal de faible ductilité à laquelle sont associées, soit du même côté ou bien de part et d'autre, des couches de matériaux déformables et/ou élastiques, qui présentent une bonne adhérence entre elles du fait de la présence d'un matériau macromoléculaire amorphe, soit dans l'électrode positive composite soit dans l'électrolyte solide polymère, un tel ensemble se prêtant aisément aux courbures et pliures sans rupture ni plissement.

Comme indiqué précédemment, le sous-ensemble électrolyte/électrode, utilisé dans les opérations conduisant à l'ensemble multicouche, est déposé sur un support consistant soit en la couche du métal de faible ductilité ou encore en un film pelable, c'est-à-dire facilement détachable du matériau auquel il adhère, ledit film étant fabriqué en une matière plastique inerte et de bonne résistance mécanique, par exemple polypropylène ou polyéthylène.

Le sous-ensemble électrolyte/électrode peut être obtenu par toute technique connue et tout particulièrement par une technique de surépandage telle que décrite dans la demande de brevet européen n^{o}88401495.2 (publication N^{o}0298802), déposée ce même jour aux noms des présents demandeurs et intitulée : "Procédé de fabrication d'un sous-ensemble électrochimique comprenant une électrode et un électrolyte et sous-ensemble ainsi réalisé".

Comme indiqué plus haut, la couche de lithium ou d'alliage ductile à base de lithium amenée à passer entre les rouleaux de chaque paire de rouleaux, lors de l'opération de lamination, est séparée desdits rouleaux soit par un film plastique pelable, soit par une couche de métal faiblement ductile ou encore par une partie de l'ensemble multicouche à produire. Dans le premier cas (film plastique pelable), la couche de lithium ou d'alliage à base de lithium est supportée par un film mince d'une matière plastique inerte, notamment polyéthylène ou polypropylène, présentant une adhésion contrôlée au lithium de telle sorte que la liaison de la couche de lithium ou d'alliage à base de lithium au film de matière platique soit suffisante pour permettre la manipulation de ladite couche supportée mais moins importante que la liaison du lithium à la couche du matériau sur laquelle est appliquée la couche à base de lithium.

Comme indiqué plus haut, la formation de l'ensemble multicouche par application l'une sur l'autre des couches utilisées pour le composer est réalisée par lamination par passage entre les rouleaux d'au moins une paire de rouleaux. Lesdits rouleaux, dont la température est réglable et qui tournent en sens inverse et à la même vitesse, exercent sur le produit à assembler une pression réglable permettant d'obtenir une bonne adhésion sans toutefois engendrer des effets notables de laminage, de friction ou autres.

Un des intérêts particuliers de ces fabrications multicouches réside dans le fait qu'à partir d'un sous-ensemble électrolyte/électrode, on peut obtenir soit des ensembles multicouches à quatre couches, soit des ensembles multicouches à six couches.

Un autre intérêt de ces fabrications multicouches réside dans le fait qu'à toutes les étapes conduisant à l'assemblage final du générateur, chacun des ensembles partiels est lié à au moins un support ayant des propriétés mécaniques compatibles avec une mise en oeuvre sur des machines travaillant en continu.

L'invention et ses avantages seront mieux compris à la lecture des exemples suivants de ses modes de réalisation donnés à titre illustratif et nullement limitatif en référence aux dessins annexés sur lesquels :
- la figure 1 représente un ensemble multicouche à quatre couches obtenu selon le deuxième mode de mise en oeuvre du procédé selon l'invention et le générateur électrochimique final obtenu par enroulement dudit ensemble ;
- la figure 2 est une vue schématique de la structure d'un ensemble multicouche à six couches obtenu selon le troisième mode de mise en oeuvre du procédé de l'invention ;
- la figure 3 représente la juxtaposition des couches obtenue lors de l'enroulement de l'ensemble multicouche selon la figure 2 ;
- la figure 4 représente un ensemble multicouche à six couches obtenu selon le quatrième mode de mise en oeuvre du procédé selon l'invention ;
- la figure 5 donne le schéma d'une installation permettant la réalisation d'un ensemble multicouche selon la figure 4 ;
- la figure 6 est une vue schématique de la structure d'un ensemble multicouche à quatre couches obtenu selon le sixième mode de mise en oeuvre du procédé selon l'invention;
- la figure 7 représente une installation pour la réalisation d'un ensemble multicouche selon la figure 2 ;
- la figure 8 schématise une installation pour la réalisation d'un ensemble multicouche selon la figure 1 ; et
- la figure 9 représente une installation pour la réalisation d'un ensemble multicouche selon la figure 6.

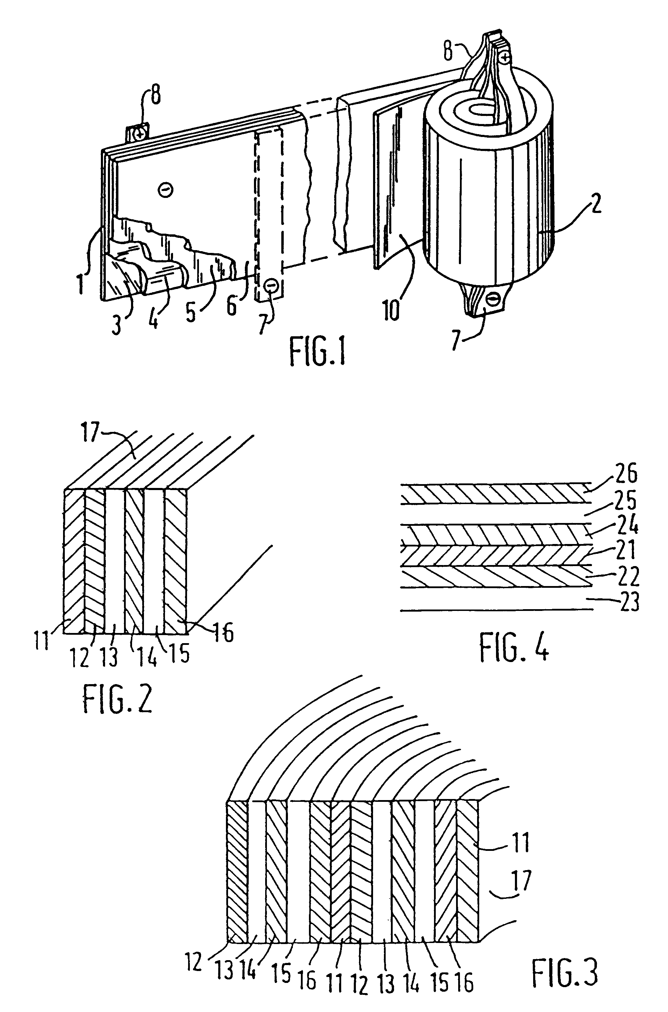

On a représenté sur la figure 1 un ensemble multicouche (1) réalisé selon le deuxième mode de mise en oeuvre du procédé selon l'invention ainsi qu'un générateur électrochimique final (2) obtenu par enroulement de l'ensemble multicouche. Cet ensemble multicouche (1) comporte une première couche (3) en aluminium ayant une épaisseur de 10 µm, une deuxième couche (4) du matériau constituant l'électrode positive composite ayant une épaisseur de 15 µm, une couche (5) d'électrolyte solide polymère de 30 µm d'épaisseur et une couche (6) de lithium de 30 µm d'épaisseur constituant l'électrode négative. De part et d'autre de cet ensemble à quatre couches sont situées, à des endroits déterminés, des pattes collectrices (7) pour faire la collection négative du courant et des pattes collectrices (8) pour la collection positive.

Dans ce mode de réalisation, l'électrode positive composite est formée par l'agglomération d'une masse plus ou moins compacte du matériau de l'électrolyte à conduction ionique, d'un matériau électrochimiquement actif et de noir de carbone. Le matériau électrochimiquement actif est constitué, dans le cas présent, d'un oxyde de vanadium.

Le matériau macromoléculaire à conduction ionique utilisé pour l'électrolyte et pour l'électrode est constitué par un sel de lithium dissous dans un copolymère d'oxyde d'éthylène.

L'ensemble comporte aussi un film de polypropylène (10) qui joue un rôle de support du lithium lors de la fabrication et d'isolant entre l'électrode positive et l'électrode négative lors de la réalisation du générateur par enroulement, ce film ayant une épaisseur de 10 µm.

On a représenté sur la figure 2 un ensemble multicouche à six couches obtenu selon le troisième mode de mise en oeuvre du procédé selon l'invention. Cet ensemble multicouche (17) comporte une couche (11) du métal faiblement ductile, par exemple aluminium, une couche (12) d'électrode composite positive, une couche (13) d'électrolyte solide polymère, une couche (14) de lithium constituant l'électrode négative, une couche (15) d'électrolyte solide polymère et enfin une couche (16) d'électrode positive composite, ces différentes couches ayant mêmes épaisseurs que celles de l'ensemble de la figure 1.

Cet ensemble (17) est destiné à être enroulé de la même façon que celle schématisée sur la figure 1, sur un mandrin cylindrique ou éventuellement sur une plaquette de façon à obtenir l'équivalent d'un cylindre aplati.

On a représenté sur la figure 3 la juxtaposition des couches obtenue lors de l'enroulement. On remarque sur cette figure 3 que l'on obtient un ensemble symétrique par rapport à la couche (11) du matériau collecteur, et que ce matériau collecteur joue le rôle de collecteur de l'électricité pour les deux électrodes positives (12) et (16) entre lesquelles il est pris en sandwich, cet ensemble étant aussi symétrique par rapport à la couche (14) de lithium. Ainsi, ces deux couches métalliques sont utilisées sur leurs deux faces, ce qui permet de minimiser au maximum l'importance massique et volumique relative du matériau faiblement ductile qui ne contribue pas à la capacité énergétique du générateur réalisé.

On a représenté sur la figure 4 un ensemble multicouche à six couches obtenu selon le quatrième mode de mise en oeuvre du procédé selon l'invention, cet ensemble multicouche comprenant une couche (21) d'un métal faiblement ductile, par exemple aluminium, jouant le rôle de collecteur. Sur l'une de ses faces ladite couche (21) comporte une couche (22) de matériau d'électrode positive composite, revêtue d'une couche (23) d'électrolyte solide polymère. Sur l'autre de ses faces, la couche (21) comporte une couche (24) de matériau d'électrode positive composite, une couche (25) d'électrolyte solide polymère et une couche (26) de lithium jouant le rôle d'électrode négative.

Lors de l'enroulement d'un tel ensemble, la couche (23) d'électrolyte vient en contact avec la couche (26) du matériau d'électrode négative. Cette réalisation permet également d'utiliser au maximum à la fois le métal de l'électrode négative, puisqu'il est en contact avec un électrolyte sur ses deux faces et le métal collecteur de l'électrode positive qui est lui aussi utilisé sur ses deux faces.

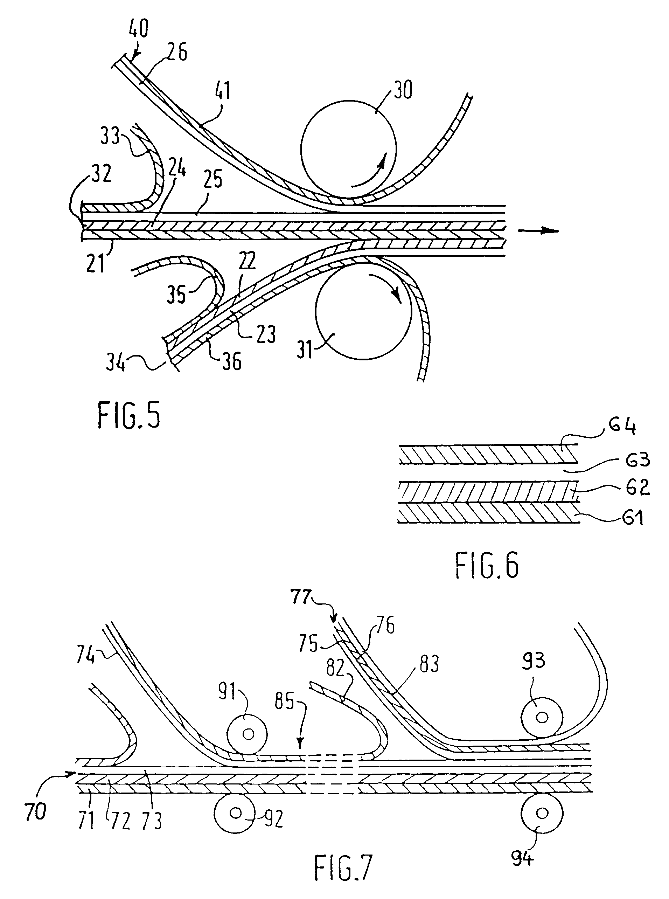

La figure 5 représente une installation permettant la réalisation de l'ensemble représenté figure 4. Cette installation comporte deux rouleaux (30) et (31) entre lesquels sont co-laminés les différentes couches de la façon suivante.

On a tout d'abord réalisé un ensemble (32) comportant une couche (21) du métal collecteur, une couche (24) de l'électrode positive et une couche (25) de l'électrolyte, cette couche (25) étant revêtue d'une couche d'un matériau plastique (33), ce matériau étant facilement arrachable. On a réalisé d'autre part un sous-ensemble (34) comportant une couche (22) d'électrode positive associée à une couche (23) d'électrolyte, les deux couches étant prises en sandwich entre deux couches (35) et (36) d'un matériau facilement arrachable, tel que le polypropylène ou le polyéthylène. De la même façon, on a réalisé un sous-ensemble (40) comportant la couche (26) de lithium associée à la couche (41) du matériau facilement arrachable.

Les trois sous-ensembles ainsi réalisés (40), (32) et (34) sont amenés entre les deux rouleaux (30) et (31) après que la couche (33) du matériau facilement arrachable soit arrachée ainsi que la couche (35). Après pressage entre les deux rouleaux et réalisation de l'ensemble, les couches (41) et (36) du matériau facilement arrachables sont arrachées.

L'ensemble multicouche représenté sur la figure 6, obtenu selon le sixième mode de mise en oeuvre du procédé selon l'invention, comprend quatre couches, à savoir une couche (61) de nickel, une couche (62) de lithium jouant le rôle d'électrode négative, une couche (63) d'électrolyte solide polymère et une couche (64) d'électrode positive composite, lesdites couches ayant des épaisseurs analogues à celles données pour les ensembles multicouches définis plus haut.

Sur la figure 7, on a représenté une installation permettant de réaliser l'ensemble multicouche défini sur la figure 2, ladite installation comportant deux paires de rouleaux, à savoir une première paire formée des rouleaux (91) et (92) et une deuxième paire constituée des rouleaux (93) et (94).

On a tout d'abord réalisé un premier sous-ensemble multicouche (73) qui comporte une couche (71) d'aluminium, une couche (72) du matériau de l'électrode positive et une couche (73) de l'électrolyte. Cet ensemble a été réalisé par une technique de surépandage telle que décrite dans la demande de brevet ci-dessus référencée.

On a d'autre part réalisé, sur un support de polypropylène, un ensemble monocouche de lithium (74).
Les deux ensembles ainsi réalisés sont ensuite amenés entre les rouleaux (91, 92) de façon à être assemblés de la même manière que celle décrite en référence à la figure 5. On obtient ainsi un ensemble intermédiaire (85), dont la structure est comparable à celle de l'ensemble multicouche représenté sur la figure 1.

On réalise d'autre part un second sous-ensemble multicouche (77) comprenant une couche du matériau d'électrode (76) positive et une couche de l'électrolyte (75), cet ensemble étant en contact avec une couche de polypropylène (83) par la face libre de la couche de matériau d'électrode positive. Ce second ensemble est mis en contact avec l'ensemble intermédiaire (85) après que la couche de polypropylène (82) ait été arrachée.

L'ensemble intermédiaire à quatre couches ou ensemble partiel (85) constitue en lui-même un générateur électrochimique complet dans lequel la couche de lithium (74) jouant le rôle d'électrode négative et la couche d'aluminium (71) jouant le rôle de collecteur de positive travaillent sur une seule de leurs faces. Si l'on désire utiliser comme tel ce générateur sous une forme enroulée ou pliée, il est nécessaire de conserver le film de polypropylène (82) associé au lithium afin d'éviter que lors de l'enroulement le lithium vienne en contact avec le collecteur (71) créant ainsi un court-circuit. Par contre, si l'on désire obtenir un générateur associant en série électrochimique plusieurs ensembles multicouches (85), le film de polypropylène (82) doit être pelé et les ensembles empilés de manière à associer une électrode négative (74) à chaque face libre du métal (71), ce dernier devant alors être choisi parmi les métaux faiblement ductiles sur lesquels le lithium n'a pas d'action, par exemple nickel, cuivre, acier inoxydable.

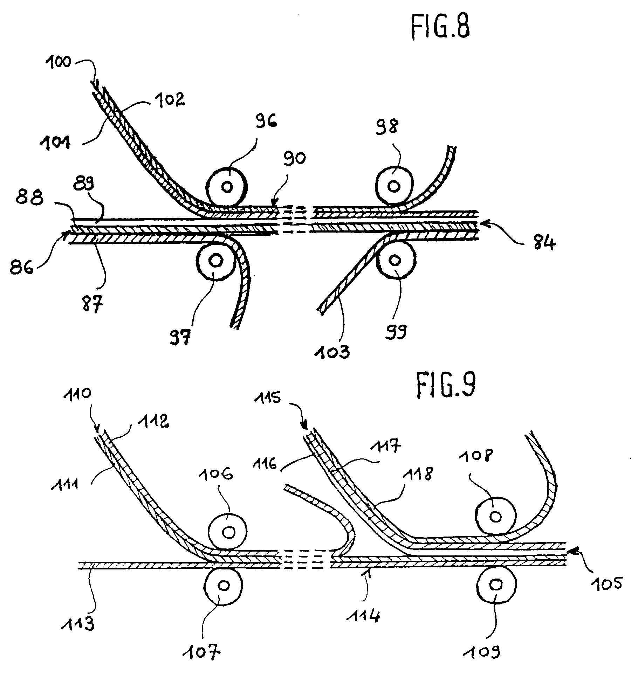

La figure 8 représente une installation permettant la réalisation d'un ensemble multicouche (84) analogue à celui défini sur la figure 1 et également à l'ensemble partiel (85) de la figure 7. L'installation de la figure 8 comporte une première paire de rouleaux (96) et (97) et une deuxième paire de rouleaux (98) et (99). On réalise tout d'abord un sous-ensemble électrolyte/électrode (86) supporté sur une couche (87) formée d'un film plastique pelable, par exemple en polypropylène, ledit sous-ensemble étant constitué d'une couche d'électrode positive composite (88) surmontée d'une couche d'électrolyte solide polymère (89). On réalise d'autre part un sous-ensemble (100) constitué d'une couche (101) de lithium associée à un film plastique pelable (102) également en polypropylène. Le sous-ensemble (100) est ensuite appliqué, côté lithium, sur l'électrolyte solide polymère (89) du sous-ensemble (86) par lamination par passage entre les rouleaux (96) et (97) pour former un ensemble partiel ou intermédiaire (90). Après pelage du film plastique (87), l'ensemble intermédiaire (90) est solidarisé, côté électrode positive (88), à une couche (103) d'un métal faiblement ductile, notamment aluminium, par lamination par passage entre les rouleaux (98) et (99). A la sortie desdits rouleaux, le film plastique (102) est retiré et l'on obtient l'ensemble multicouche (84) possédant quatre couches.

Cet ensemble multi-couche (84) peut être utilisé, avant ou après retrait du film plastique pelable, comme indiqué pour l'ensemble intermédiaire (85) de la figure 7.

La figure 9 représente une installation permettant la réalisation d'un ensemble multi-couche (105) analogue à celui défini schématiquement sur la figure 6. Ladite installation comporte une première paire de rouleaux (106) et (107) et une deuxième paire de rouleaux (108) et (109). On réalise tout d'abord un sous-ensemble (110) formé d'une couche (111) de lithium supportée par un film plastique pelable (112), par exemple en polypropylène. Le sous-ensemble (110) est ensuite pressé, côté lithium, sur une couche (113) d'un métal faiblement ductile sur lequel le lithium n'a pas d'action, par exemple nickel, par lamination par passage entre les rouleaux (106) et (107). Après pelage du film plastique (112), on applique sur la couche de lithium de l'ensemble intermédiaire (114) formé, un sous-ensemble électrolyte/électrode (115), côté électrolyte en regard du lithium, ledit sous-ensemble étant constitué d'une couche (116) d'électrolyte solide polymère surmontée d'une couche (117) d'électrode positive composite et étant supporté par un film plastique pelable (118) en polypropylène, l'ensemble intermédiaire (114) et le sous-ensemble supporté (115) étant solidarisé par lamination par passage entre les rouleaux (108) et (109). A la sortie desdits rouleaux, le film plastique (118) est retiré et l'on obtient un ensemble multi-couche (105) à quatre couches, qui est un générateur complet à électrode positive libre.

En superposant n ensembles (105) et en appliquant un collecteur de positive sur la dernière couche libre d'électrode positive, on obtient un générateur dont le voltage est égal à n fois celui d'un ensemble unitaire (105).
L'électrode positive libre n'étant pas adhérente avant chauffage à la face libre du collecteur d'électrode négative, c'est-à-dire à la couche (113) du métal faiblement ductile tel que nickel, on peut enrouler ou plier des groupements de n cellules unitaires (105), qui ne deviendront adhérents qu'après chauffage.

On peut également utiliser les ensembles (105) pour réaliser des montages en parallèle. Pour ce faire, on applique un ensemble (105), sur chacune des faces d'une couche d'un métal faiblement ductile, par exemple aluminium ou encore nickel, cuivre ou acier inoxydable, en opérant par exemple par lamination entre deux rouleaux de telle sorte que la couche d'électrode positive de chaque ensemble (105) soit en contact avec le métal faiblement ductile. Le système ainsi formé comporte donc deux collecteurs d'électrode négative extérieurs, à savoir les couches (113) du métal faiblement ductile inerte vis-à-vis du lithium, et un collecteur d'électrode positive central en contact sur chacune de ses deux faces avec une électrode positive formée par la couche (117) d'électrode positive composite de l'ensemble (105) qui est appliqué sur ladite face.

## Revendications

1. Procédé de fabrication d'un ensemble multicouche utilisable pour la réalisation de l'assemblage, par enroulement, empilement ou pliage, de générateurs électrochimiques au lithium en couche mince à électrolyte solide polymère, cet ensemble multicouche comportant une couche d'un métal faiblement ductible du type aluminium, cuivre, nickel ou acier inoxydable, une couche de lithium ou d'alliage ductile à base de lithium, au moins une couche d'électrode positive composite et au moins une couche d'électrolyte solide polymère, ledit procédé consistant à appliquer lesdites couches l'une sur l'autre en opérant de telle sorte que la couche de lithium ou d'alliage ductile à base de lithium ne vienne pas au contact d'une couche d'électrode positive composite et se caractérisant en ce que la formation de l'ensemble multicouche par application l'une sur l'autre des couches utilisées pour le composer est réalisée par lamination par passage entre les rouleaux d'au moins une paire de rouleaux, en ce que l'on amène la couche d'électrolyte solide polymère et la couche d'électrode positive composite à l'opération de lamination sous la forme d'un sous-ensemble bicouche électrolyte/électrode, qui comporte la couche d'électrolyte solide polymère accolée à la couche d'électrode positive composite et qui est supporté soit sur la couche du métal faiblement ductile soit sur un film pelable en une matière plastique inerte, et en ce que l'on conduit l'opération de lamination de telle sorte que la couche de lithium ou d'alliage ductile à base de lithium amenée à passer entre les rouleaux de chaque paire de rouleaux est séparée desdits rouleaux soit par un film plastique pelable, soit par une couche du métal faiblement ductile ou encore par une partie de l'ensemble multicouche à produire.

2. Procédé selon la revendication 1, caractérisé en ce que l'on amène à l'opération de lamination, d'une part, un sous-ensemble bicouche électrolyte/électrode supporté côté électrode par la couche du métal faiblement ductile et, d'autre part, la couche de lithium ou d'alliage ductile à base de lithium supportée par un film plastique pelable et l'on met en oeuvre l'opération de lamination de manière à appliquer ladite couche de lithium ou d'alliage ductile à base de lithium sur la couche d'électrolyte du sous-ensemble bicouche.

3. Procédé selon la revendication 1, caractérisé en ce que l'on amène à l'opération de lamination un sous-ensemble bicouche électrolyte/électrode supporté, côté électrode, par un film plastique pelable, la couche de lithium ou d'alliage ductile à base de lithium, supportée par un film plastique pelable, et la couche du métal faiblement ductile et l'on met en oeuvre l'opération de lamination de manière à appliquer ladite couche de lithium ou d'alliage ductile à base de lithium sur la couche d'électrolyte du sous-ensemble bicouche, puis, après avoir retiré le film plastique support recouvrant la couche d'électrode dudit sous-ensemble, à appliquer la couche du métal faiblement ductile sur ladite couche d'électrode.

4. Procédé selon la revendication 2 ou 3, caractérisé en ce que sur la couche de lithium ou d'alliage ductile à base de lithium laminée sur le sous-ensemble bicouche électrolyte/électrode supporté, on applique, également par lamination, après avoir retiré le film plastique recouvrant ladite couche, le côté électrolyte d'un second sous-ensemble bicouche électrolyte/électrode, ledit sous-ensemble étant éventuellement supporté, côté électrode, par un film plastique pelable, que l'on retire en fin d'opération.

5. Procédé selon la revendication 2 ou 3, caractérisé en ce que, sur la face libre de la couche du métal faiblement ductile supportant le sous-ensemble bicouche électrolyte/électrode associé à la couche de lithium ou d'alliage ductile à base de lithium, on applique, par lamination, le côté électrode d'un second sous-ensemble bicouche électrolyte/électrode, ledit second sous-ensemble étant éventuellement supporté, côté électrolyte, par un film plastique pelable, que l'on retire en fin d'opération.

6. Procédé selon la revendication 1, caractérisé en ce que l'on amène à l'opération de lamination la couche du métal faiblement ductile, deux sous-ensembles bicouches électrolyte/électrode, lesdits sous-ensembles étant éventuellement supportés, côté électrolyte, par un film plastique pelable, et une couche de lithium ou d'alliage ductile à base de lithium supportée par un film plastique pelable et l'on met en oeuvre l'opération de lamination de manière à appliquer le côté électrode d'un sous-ensemble électrolyte/électrode sur chacune des deux faces de la couche du métal faiblement ductile, puis à appliquer la couche de lithium ou d'alliage ductile à base de lithium sur la couche d'électrolyte de l'un desdits sous-ensembles associés à la couche du métal faiblement ductile, après avoir retiré, s'il est présent, le film plastique support recouvrant ladite couche d'électrolyte.

7. Procédé selon la revendication 1, caractérisé en ce que l'on amène à l'opération de lamination la couche du métal faiblement ductile, ledit métal étant du type ne réagissant pas avec le lithium, la couche de lithium ou d'alliage ductile à base de lithium supportée par un film plastique pelable et un sous-ensemble bicouche élecrolyte/électrode, ledit sous-ensemble étant éventuellement recouvert, côté électrode, d'un film plastique pelable que l'on retire ou non en fin d'opération, et l'on met en oeuvre l'opération de lamination de manière à appliquer la couche de lithium ou d'alliage ductile à base de lithium sur l'une des faces de la couche du métal faiblement ductile ne réagissant pas avec le lithium, puis à appliquer le côté électrolyte du sous-ensemble bicouche électrolyte/électrode sur la couche de lithium ou d'alliage ductile à base de lithium après avoir retiré le film plastique pelable recouvrant ladite couche.

8. Procédé selon la revendication 1, caractérisé en ce que l'on amène à l'opération de lamination un sous-ensemble bicouche électrolyte/électrode supporté, côté électrode, par un film plastique pelable, que l'on retire ou non en fin d'opération, et la couche de lithium ou d'alliage ductile à base de lithium supportée sur la couche du métal faiblement ductile, ledit métal ne réagissant pas avec le lithium et en ce que l'on met en oeuvre l'opération de lamination de manière à appliquer la couche de lithium ou d'alliage ductile à base de lithium sur le côté électrolyte du sous-ensemble bicouche électrolyte/électrode.

9. Procédé selon la revendication 2 ou 3, caractérisé en ce que l'ensemble multicouche obtenu est enroulé ou plié pour former un générateur électrochimique.

10. Procédé selon la revendication 2 ou 3, caractérisé en ce que le métal de la couche du métal faiblement ductile ne réagit pas avec le lithium et en ce que plusieurs des ensembles multicouches obtenus sont empilés, après avoir retiré le fim plastique recouvrant leur couche de lithium ou d'alliage ductile à base de lithium, de manière à appliquer une couche de lithium sur la face libre d'une couche du métal faiblement ductile, pour former un générateur électrochimique.

11. Procédé selon l'une des revendications 4 à 6, caractérisé en ce que l'ensemble multicouche formé est enroulé ou plié ou bien plusieurs des ensembles multicouches obtenus sont empilés pour former un générateur électrochimique.

12. Procédé selon la revendication 7 ou 8, caractérisé en ce que plusieurs des ensembles multicouches obtenus sont empilés, après avoir retiré le film plastique pelable recouvrant leur couche d'électrode positive, et un collecteur de positive est appliqué sur la dernière couche libre d'électrode positive, pour former un générateur électrochimique.

13. Procédé selon la revendication 7 ou 8, caractérisé en ce que l'on applique un ensemble multicouche obtenu, après avoir retiré le film plastique pelable recouvrant sa couche d'électrode positive, sur chacune des faces d'une couche d'un métal faiblement ductile tel que cuivre, nickel, aluminium ou acier inoxydable, de telle sorte que la couche d'électrode positive de chaque ensemble multicouche soit en contact avec le métal faiblement ductile, pour former un générateur électrochimique.

## Claims

1. Process for manufacturing a multi-layered assembly which can be used to assemble by rolling, stacking or folding, electrochemical generators with a thin layer of lithium with a solid polymer electrolyte, this multi-layered assembly comprising a layer of slightly ductile metal of the aluminium, copper, nickel or stainless steel type, a layer of lithium or lithium-based ductile alloy, at least one layer of composite positive electrode and at least one layer of solid polymer electrolyte, the said process consisting in applying the said layers to one another by proceeding such that the layer of lithium or ductile lithium-based alloy does not come into contact with a composite positive electrode layer, and characterised in that the multi-layered assembly resulting from the application of the layers used in the construction thereof to one another is formed by lamination as a result of passing between the rollers of at least one pair of rollers; in that the solid polymer electrolyte layer and the layer of composite positive electrode are brought to the lamination operation in the form of an electrolyte/electrode two-layer sub-assembly which comprises the solid polymer electrolyte layer attached to the composite positive electrode layer and which is either supported on the slightly ductile metal layer or on a strippable film of inert plastics material; and in that the lamination operation is performed such that the layer of lithium or lithium-based ductile alloy made to pass between the rollers of each pair of rollers is separated from the said rollers either by a strippable plastics film or by a layer of the slightly ductile metal or even by part of the multi-layered assembly to be produced.

2. Process according to Claim 1, characterised in that firstly an electrolyte/electrode two-layer sub-assembly supported on the electrode side by the slightly ductile metal layer and secondly the layer of lithium or lithium-based ductile alloy supported by a strippable plastics film are brought to the lamination operation and the said operation is performed such that the said layer of lithium or lithium-based ductile alloy is applied onto the electrolyte layer of the two-layer sub-assembly.

3. Process according to Claim 1, characterised in that an electrolyte/electrode two-layer sub-assembly supported on the electrode side by a strippable plastics film, the layer of lithium or lithium-based ductile alloy supported by a strippable plastics film and the slightly ductile metal layer are brought to the lamination operation, and the lamination operation is performed such that the said layer of lithium or lithium-based ductile alloy is applied onto the electrolyte layer of the two-layer sub-assembly, and the slightly ductile metal layer is applied onto the said electrode layer when the plastics support film covering the electrode layer of the said sub-assembly has been removed.

4. Process according to Claim 2 or 3, characterised in that the electrolyte side of a second electrolyte/electrode two-layer sub-assembly, which is optionally supported on the electrode side by a strippable plastics film which is removed at the end of the operation, is also applied by lamination onto the layer of lithium or lithium-based ductile alloy laminated onto the supported electrolyte/electrode two-layer sub-assembly.

5. Process according to Claim 2 or 3, characterised in that the electrode side of a second electrolyte/electrode two-layer sub-assembly is applied by lamination to the free surface of the slightly ductile metal layer supporting the electrolyte/electrode two-layer sub-assembly associated with the layer of lithium or lithium-based ductile alloy, the said second sub-assembly being optionally supported on the electrolyte side by a strippable plastics film which is removed at the end of the operation.

6. Process according to Claim 1, characterised in that the layer of slightly ductile metal, two electrolyte/electrode two-layer sub-assemblies, the said sub-assemblies being optionally supported on the electrolyte side by a strippable plastics film, and a layer of lithium or lithium-based ductile alloy supported by a strippable plastics film are brought to the lamination operation, and the lamination operation is performed such that the electrode side of an electrolyte/electrode sub-assembly is applied to each of the two faces of the slightly ductile metal layer, and subsequently such that the layer of lithium or lithium-based ductile alloy is applied onto the electrolyte layer of one of the said sub-assemblies associated with the layer of slightly ductile metal, after the supporting plastics film covering the said electrolyte layer has been removed if present.

7. Process according to Claim 1, characterised in that the layer of slightly ductile metal, the metal being of the type which does not react with lithium, the layer of lithium or lithium-based ductile alloy supported by a strippable plastics film and an electrolyte/electrode two-layer sub-assembly, the said sub-assembly being optionally covered on the electrode side with a strippable plastics film which may or may not be removed at the end of the operation, are brought to the lamination operation, and the lamination operation is performed such that the layer of lithium or lithium-based ductile alloy is applied onto one of the faces of the layer of metal which is slightly ductile and does not react with lithium, and subsequently such that the electrolyte side of the electrolyte/electrode two-layer sub-assembly is applied onto the layer of lithium or lithium-based ductile alloy when the strippable plastics film covering the said layer has been removed.

8. Process according to Claim 1, characterised in that an electrolyte/electrode two-layer sub-assembly, supported on the electrode side by a strippable plastics film which may or may not be removed at the end of the operation, and the layer of lithium or lithium-based ductile alloy, supported on the layer of metal which is slightly ductile but does not react with lithium, are brought to the lamination operation; and in that the lamination operation is performed such that the layer of lithium or lithium-based ductile alloy is applied onto the electrolyte side of the electrolyte/electrode two-layer sub-assembly.

9. Process according to Claim 2 or 3, characterised in that the resultant multi-layered assembly is rolled up or folded so as to form an electrochemical generator.

10. Process according to Claim 2 or 3, characterised in that the metal of the slightly ductile metal layer does not react with lithium; and in that a plurality of the resultant multilayered assemblies are stacked, when the plastics film covering their lithium or lithium-based ductile alloy layer has been removed, such that a layer of lithium is applied to the free surface of a slightly ductile metal layer so as to form an electrochemical generator.

11. Process according to any one of Claims 4 to 6, characterised in that the multi-layered assembly formed is rolled up or folded or a plurality of resultant multi-layered assemblies is stacked to form an electrochemical generator.

12. Process according to Claim 7 or 8, characterised in that a plurality of the resultant multi-layered assemblies is stacked, when the strippable plastics film covering their positive electrode layer has been removed, and a positive collector is applied to the final free layer of positive electrode so as to form an electrochemical generator.

13. Process according to Claim 7 or 8, characterised in that a resultant multi-layered assembly is applied to each of the faces of a layer of slightly ductile metal such as copper, nickel, aluminium or stainless steel when the strippable plastics film covering its positive electrode layer has been removed such that the positive electrode layer of each multi-layered assembly is in contact with the slightly ductile metal so as to form an electrochemical generator.

## Patentansprüche

1. Verfahren zur Herstellung eines mehrlagigen Schichtkörpers, der geeignet ist für die Herstellung elektrochemischer Generatoren mit einer dünnen Lithiumschicht auf einem Polymer als festem Elektrolyten durch Zusammenrollen, Übereinanderschichten oder Falten, wobei dieser mehrlagige Schichtkörper eine Schicht aus einem Metall von geringer Duktilität vom Typ Aluminium, Kupfer, Nickel oder nichtrostender Stahl, eine Lage aus Lithium oder einer duktilen Legierung auf Lithiumbasis, wenigstens eine Lage eines Verbundstoffes als positive Elektrode und wenigstens eine Lage eines Polymers als fester Elektrolyt, durch Übereinanderschichten der einzelnen Lagen auf solche Weise, daß die Lage aus Lithium oder einer duktilen Legierung auf Lithiumbasis nicht in Berührung kommt mit einer Schicht des Verbundkörpers als positiver Elektrode, dadurch **gekennzeichnet,** daß die Bildung des mehrlagigen Schichtkörpers durch Übereinanderschichten der einzelnen Lagen vermittels Aufkaschieren durch Hindurchführen zwischen den Walzen wenigstens eines Walzenpaars durchgeführt wird, man die Lage des Polymers als fester Elektrolyt und die Lage des Verbundkörpers als positive Elektrode dem Kaschiervorgang in Form eines zweischichtigen Teilsystems aus Elektrolyt und Elektrode zuführt, das die Schicht auf die Schicht des Verbundkörpers als positiver Elektrode aufgebrachten Polymers als festem Elektrolyten umfaßt und getragen wird von der Schicht des schwachduktilen Metalls oder einer abziehbaren Folie aus einem inerten Kunststoff und man das Aufkaschieren so durchführt, daß die Lithiumschicht bzw. die Schicht der duktilen Legierung auf Lithiumbasis, die herangeführt wird, um zwischen die Walzen Jedes Walzenpaars hindurchgeführt zu werden, von den Walzen durch eine abziehbare Kunststoffolie eine Schicht aus einem schwachduktilen Metall oder außerdem durch einen Teil des herzustellenden mehrlagigen Schichtkörpers getrennt ist.

2. Verfahren nach Anspruch 1, dadurch **gekennzeichnet,** daß man zum Aufkaschieren einerseits ein zweischichtiges Teilsystem aus Elektrolyt und Elektrode verwendet, das elektrodenseitig von der Schicht des schwachduktilen Metalls getragen wird, und andererseits die Schicht aus Lithium oder einer duktilen Legierung auf Lithiumbasis, die von einer abziehbaren Kunststoffolie getragen wird, und der Kaschiervorgang so durchgeführt wird, daß die Schicht aus Lithium oder einer duktilen Legierung auf Lithiumbasis auf die Elektrolytschicht des zweilagigen Schichtkörpers aufgebracht wird.

3. Verfahren nach Anspruch 1, dadurch **gekennzeichnet,** daß man zum Aufkaschieren ein zweischichtiges Teilsystem aus Elektrolyt und Elektrode, das elektrodenseitig von einer abziehbaren Kunststoffolie getragen wird, die Schicht aus Lithium oder einer duktilen Legierung auf Lithiumbasis, die von einer abziehbaren Kunststoffolie getragen wird und die Schicht des schwachduktilen Metalls verwendet, und der Kaschiervorgang so durchgeführt wird, daß die Schicht aus Lithium oder einer duktilen Legierung auf Lithiumbasis auf die Elektrolytschicht des zweilagigen Schichtkörpers aufgebracht wird und nach Abziehen des die Elektrodenschicht des Teilsystems überziehenden Kunststoffolienträgers die Schicht des schwachduktilen Metalls auf die Elektrodenschicht aufgebracht wird.

4. Verfahren nach Anspruch 2 oder 3, dadurch **gekennzeichnet,** daß man auf die Schicht aus Lithium oder einer duktilen Legierung auf Lithiumbasis, die auf das zweilagige, eine Trägerschicht aufweisende Teilsystem aus Elektrolyt und Elektrode aufkaschiert wurde, auf die Elektrolytseite nach Abziehen der diese Schicht überziehenden Kunststoffolie ein zweites zweilagiges Teilsystem aus Elektrolyt und Elektrode ebenfalls durch Kaschieren aufbringt, wobei dieses Teilsystem gegebenenfalls elektrodenseitig von einer abziehbaren Kunststoffolie getragen wird, die man am Ende des Arbeitsgangs abzieht.

5. Verfahren nach Anspruch 2 oder 3, dadurch **gekennzeichnet,** daß man auf die freiliegende Fläche der Schicht des schwachduktilen Metalls, welche das zweilagige Teilsystem aus Elektrolyt und Elektrode trägt, das mit der Schicht aus Lithium oder einer duktilen Legierung auf Lithiumbasis verbunden ist, auf die Elektrodenseite eines zweiten zweilagigen Teilsystems aus Elektrolyt und Elektrode aufkaschiert, wobei dieses zweite Teilsystem gegebenenfalls elektrolytseitig von einer abziehbaren Kunststoffolie getragen wird, die man am Ende des Arbeitsgangs abzieht.

6. Verfahren nach Anspruch 1, dadurch **gekennzeichnet,** daß man zum Aufkaschieren die Schicht des schwachduktilen Metalls, zwei zweilagige Teilsysteme aus Elektrolyt und Elektrode, wobei diese gegebenenfalls elektrolytseitig von einer abziehbaren Kunststoffolie getragen werden, und einer Schicht aus Lithium oder einer duktilen Legierung auf Lithiumbasis, die von einer abziehbaren Kunststoffolie getragen wird, verwendet, und der Kaschiervorgang so durchgeführt wird, daß man die Elektrodenseite eines Teilsystems aus Elektrolyt und Elektrode auf jede der beiden Flächen der Schicht des schwachduktilen Metalls aufbringt und dann die Schicht aus Lithium oder einer duktilen Legierung auf Lithiumbasis auf die Elektrolytschicht eines der mit der Schicht des schwachduktilen Metalls verbundenen Teilsysteme aufbringt, nachdem man den die Elektrolytschicht überziehenden Kunststoffolienträger, sofern vorhanden, abgezogen hat.

7. Verfahren nach Anspruch 1, dadurch **gekennzeichnet,** daß man zum Aufkaschieren die Schicht des schwachduktilen Metalls, wobei dieses mit Lithium nicht reagiert, die Schicht aus Lithium oder einer duktilen Legierung auf Lithiumbasis, die von einer abziehbaren Kunststoffolie getragen wird, und ein zweilagiges Teilsystem aus Elektrolyt und Elektrode verwendet, wobei dieses gegebenenfalls elektrodenseitig von einer abziehbaren Kunststoffolie überzogen ist, die man gegebenenfalls am Ende des Arbeitsgangs abzieht, und man das Aufkaschieren so durchführt, daß man die Schicht aus Lithium oder einer duktilen Legierung auf Lithiumbasis auf eine der Flächen der Schicht des schwachduktilen Metalls, das mit Lithium nicht reagiert, aufbringt und dann die Elektrolytseite des zweilagigen Teilsystems aus Elektrolyt und Elektrode auf die Schicht aus Lithium oder der duktilen Legierung auf Lithiumbasis aufbringt, nachdem man die die Schicht überziehende abziehbare Kunststoffolie abgezogen hat.

8. Verfahren nach Anspruch 1, dadurch **gekennzeichnet,** daß man zum Aufkaschieren ein zweilagiges Teilsystem aus Elektrolyt und Elektrode, das elektrodenseitig von einer abziehbaren Kunststoffolie getragen wird, die man gegebenenfalls am Ende des Arbeitsgangs abzieht, und die Schicht aus Lithium oder einer duktilen Legierung auf Lithiumbasis, die auf der Schicht des schwachduktilen Metalls aufliegt, wobei dieses mit Lithium nicht reagiert, verwendet und man so aufkaschiert, daß man die Schicht aus Lithium oder einer duktilen Legierung auf Lithiumbasis auf die Elektrolytseite des zweilagigen Teilsystems aus Elektrolyt und Elektrode aufbringt.

9. Verfahren nach Anspruch 2 oder 3, dadurch **gekennzeichnet,** daß der erhaltene mehrlagige Schichtkörper zur Bildung eines elektrochemischen Generators zusammengerollt oder gefaltet wird.

10. Verfahren nach Anspruch 2 oder 3, dadurch **gekennzeichnet,** daß das Metall der Schicht des schwachduktilen Metalls mit Lithium nicht reagiert und mehrere erhaltene mehrlagige Schichtkörper übereinander geschichtet werden, nachdem man die Kunststoffolie entfernt hat, welche ihre Schicht aus Lithium oder einer duktilen Legierung auf Lithiumbasis überzieht, und zwar auf eine Weise, daß man eine Lithiumschicht auf die freiliegende Fläche einer Schicht des schwachduktilen Metalls aufbringt, um einen elektrochemischen Generator zu bilden.

11. Verfahren nach einem der Ansprüche 4 bis 6, dadurch **gekennzeichnet,** daß der gebildete mehrlagige Schichtkörper zusammengerollt oder gefaltet wird oder mehrere erhaltene mehrlagige Schichtkörper zur Bildung eines elektrochemischen Generators übereinander geschichtet werden.

12. Verfahren nach Anspruch 7 oder 8, dadurch **gekennzeichnet,** daß mehrere erhaltene mehrlagige Schichtkörper übereinander geschichtet werden, nachdem man die abziehbare Kunststoffolie, welche ihre Schicht der positiven Elektrode überzieht, abgezogen hat und man zur Bildung eines elektrochemischen Generators auf die letzte freiliegende Schicht der positiven Elektrode eine Klemme für deren Sammlung aufbringt.

13. Verfahren nach Anspruch 7 oder 8, dadurch **gekennzeichnet,** daß man einen erhaltenen mehrlagigen Schichtkörper nach Abziehen der seine Schicht der positiven Elektrode überziehenden abziehbaren Kunststoffolie auf jede der Flächen einer Schicht eines schwachduktilen Metalls wie Kupfer, Nickel, Aluminium oder nichtrostendem Stahl so aufbringt, daß die Schicht der positiven Elektrode jedes mehrlagigen Schichtkörpers mit dem schwachduktilen Metall in Kontakt steht, um einen elektrochemischen Generator zu bilden.
